# EUROPEAN PATENT APPLICATION

(11) **EP 4 838 505 A1**
(43) Date of publication of application: **11.11.2026**
(21) Application number: 26171903.3
(22) Date of filing: 13.04.2026
(51) Int. Cl.: G08G 5/21, G06Q 10/047, G06Q 10/0631, G06Q 50/40, G08G 5/26, G08G 5/32, G08G 5/34, G08G 5/53, G08G 5/55, G08G 5/76

(54) **SYSTEM TO ASSESS AIRLINE OPERATIONAL EFFICIENCY AND ENVIRONMENTAL IMPACT**

(30) Priority: 30.04.2025 US 202519194245
(71) Applicant: The Boeing Company, Arlington, VA 22202 (US)
(72) Inventor: POLAINA MORALES, Manuel, Arlington, 22202 (US); D'ALTO, Luis Pedro, Arlington, 22202 (US); LOPEZ LEONES, Javier, Arlington, 22202 (US)
(74) Representative: Bugnion S.p.A. - US1

(57) **Abstract**

In some implementations, a flight assessment system may reconstruct a flown trajectory of a flight based on surveillance data associated with the flight. The flight assessment system may generate one or more reference trajectories for the flight based on the surveillance data or flight plan data. The flight assessment system may calculate one or more performance indicators for the flight based on a comparison of the flown trajectory to the one or more reference trajectories.

## Description

### FIELD

The present disclosure relates generally to flight planning and to assessing operational efficiency and environmental impact of flights.

### BACKGROUND

Flight planning is a process in which a flight plan for an aircraft flight is generated. The flight plan typically includes proposed parameters, such as route, height (e.g., altitude), speed, and fuel loading, for the aircraft flight. Airlines typically plan operations for flights pre-tactically (e.g., in advance of the flights) using flight planning software. During this pre-tactical flight planning phase, airlines may use the flight planning software to try to minimize their direct operating costs while satisfying time and environmental impact constraints.

### SUMMARY

An embodiment of the present disclosure provides a method, comprising: reconstructing a flown trajectory of a flight based on surveillance data associated with the flight; generating one or more reference trajectories for the flight based on the surveillance data or flight plan data; and calculating one or more performance indicators for the flight based on a comparison of the flown trajectory to the one or more reference trajectories.

Another embodiment of the present disclosure provides a system, comprising: a trajectory computing infrastructure (TCI) configured to: reconstruct a flown trajectory of a flight based on surveillance data associated with the flight, an aircraft performance model associated with an aircraft of the flight, and meteorological information associated with the flight, and generate a reference trajectory for the flight based on one or more of the flown trajectory, the surveillance data, the aircraft performance model, the meteorological information, or flight plan data; and a trajectory assessment module configured to: calculate one or more performance indicators for the flight based on a comparison of the flown trajectory to the reference trajectory.

Yet a further embodiment of the present disclosure provides a non-transitory computer-readable medium storing a set of instructions, the set of instructions comprising: one or more instructions that, when executed by one or more processors of a device, cause the device to: extract aircraft intent information from surveillance data associated with a flight; reconstruct a flown trajectory of the flight based on the aircraft intent information; generate one or more reference trajectories for the flight based on an estimated initial aircraft mass associated with the flown trajectory and at least one of the aircraft intent information or flight plan data; and calculate one or more performance indicators for the flight based on a comparison of the flown trajectory to the one or more reference trajectories.

The features, functions, and advantages described herein can be achieved independently in various implementations or can be combined in other implementations, further details of which are shown in the drawings and described below.

### BRIEF DESCRIPTION OF THE DRAWINGS

Figs. 1A-1G are diagrams of an example implementation associated with a system to assess operational efficiency and environmental impact of flights.
Fig. 2 is a diagram of an example environment in which systems and/or methods described herein may be implemented.
Fig. 3 is a diagram of example components of a device associated with a system to assess operational efficiency and environmental impact of flights.
Fig. 4 is a flowchart of an example process associated with a system to assess operational efficiency and environmental impact of flights.
Fig. 5 is a flowchart of an example process associated with a system to assess operational efficiency and environmental impact of flights.
Fig. 6 is a flowchart of an example process associated with a system to assess operational efficiency and environmental impact of flights.

### DETAILED DESCRIPTION

The following detailed description of example implementations refers to the accompanying drawings. The same reference numbers in different drawings identify the same or similar elements.

Airspace users (AUs) (e.g., airlines and/or other aircraft operators) typically plan operations for flights pre-tactically (e.g., in advance of the flights) using flight planning software. During such a pre-tactical flight planning phase, AUs may use the flight planning software to try to minimize their direct operating costs while fulfilling time and environmental impact constraints. The direct operating costs associated with flights make up a significant portion (e.g., up to 50 percent) of the total operating costs for AUs and are highly affected by the way aircraft are being operated during the flights. For example, differences in cruise speeds and/or altitudes can increase the direct operating costs by up to 5 percent. Although the pre-tactical flight planning attempts to plan flight operations that minimize the direct operating costs for a flight while fulfilling time and environment constraints, on the day of the flight, the flight operations can be affected by different types of disruptions and uncertainties (e.g., weather, air traffic control, network delays) that reduce the operational and/or environment efficiency of the flight operations. Currently, there is a lack of high-fidelity post-flight analytics tools capable of assessing the operational efficiency and environmental impact of the actual flown trajectory of a flight (e.g., resulting from the actual flight operations for the flight). For example, existing tools are not capable of estimating fuel consumption and aircraft emissions for the actual flown trajectory of a flight accurately enough to identify operational and/or environmental efficiencies in the flight operations. Furthermore, it is challenging to accurately assess operational and/or environmental efficiencies of an actual flown trajectory for a flight without using airline sensitive data (e.g., take-off mass, cost index, and/or thrust values, among other examples), which may not be available.

Some implementations described herein enable a flight assessment system configured to assess the operational efficiency and/or environmental impact of a flight based on a flown trajectory corresponding to the actual flight operations for the flight. The flight assessment system reconstructs the flown trajectory of the flight based on surveillance data, and generates one or more reference trajectories for the flights based on the surveillance data or flight plan data. For example, the one or more reference trajectories may include a trajectory associated with the planned operations in the flight plan for the flight, one or more trajectories associated with flight operations performed by others (e.g., trajectories of competitors' flights), and/or one or more trajectories associated with flight operations in hypothetical (e.g., what-if) scenarios. The flight assessment system compares the flown trajectory of the flight to the one or more reference trajectories, and calculates one or more performance indicators for the flight based on the comparison of the flown trajectory to the one or more reference trajectories. The performance indicators may be associated with the operational efficiency of the flight and/or the environmental impact of the flight. In some implementations, the flight assessment system may determine one or more corrective actions based on the one or more performance indicators. As a result, the operational efficiency and environmental impact of the flight can be assessed with improved accuracy. Furthermore, the one or more corrective actions may result in improved operational efficiency and/or reduced environmental impact for the flight and/or one or more subsequent flights.

In some implementations, the surveillance data and flight plan data are retrieved from publicly available data sources. Accordingly, the flight assessment system leverages publicly available data sources to generate and compare aircraft trajectories without the need for airline sensitive data (e.g., take-off mass, cost index, and/or thrust values, among other examples). In some implementations, the flight assessment system extracts intent information from the surveillance data, and generates the flown trajectory of the flight based on the intent information. In this way, the flight assessment system is enabled to reconstruct the flown trajectory corresponding to the flight actions performed for the flight with a high level of accuracy.

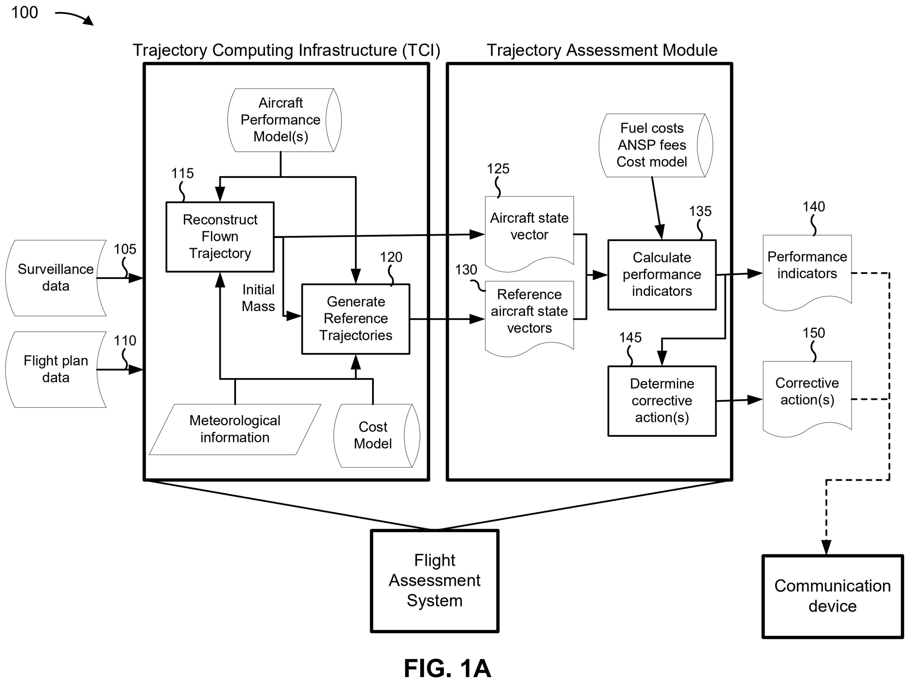

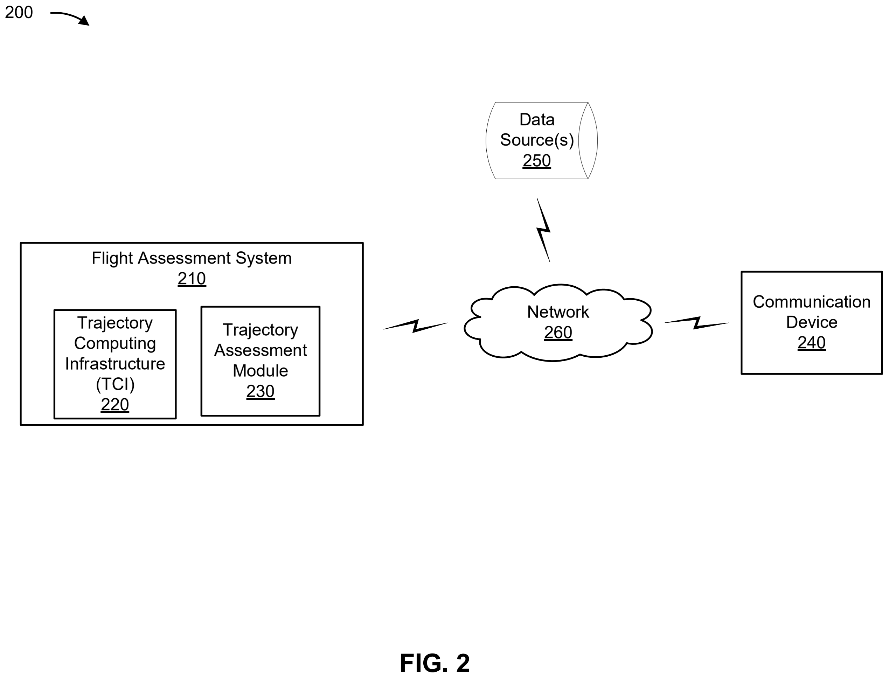

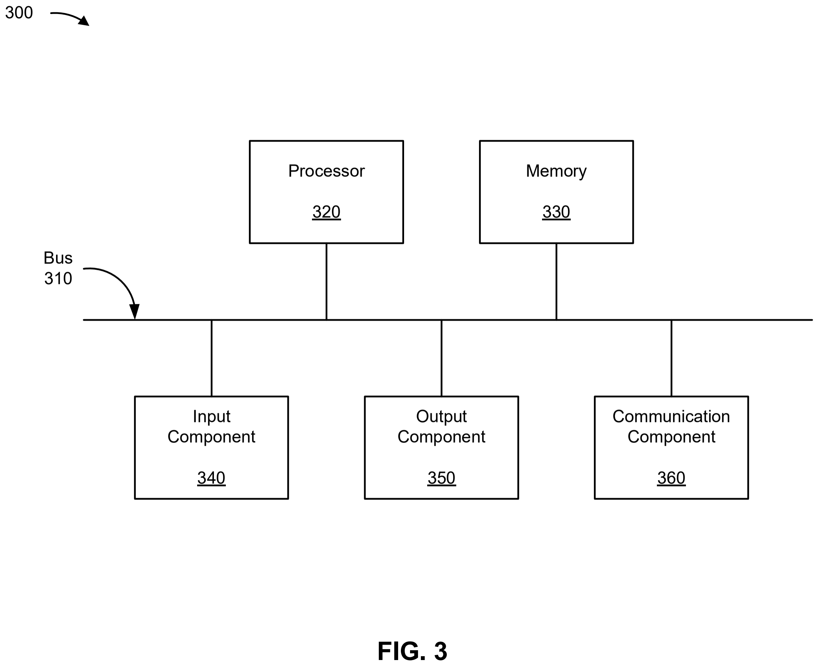

Figs. 1A-1G are diagrams of an example implementation 100 associated with a system to assess operational efficiency and environmental impact of flights. As shown in Figs. 1A-1G, example implementation 100 includes a flight assessment system and a communication device. The flight assessment system includes a trajectory computing infrastructure (TCI) and a trajectory assessment module. These devices are described in more detail below in connection with Fig. 2 and Fig. 3.

As shown in Fig. 1A, and by reference number 105, the flight assessment system (e.g., the TCI of the flight assessment system) obtains surveillance data associated with one or more flights. The surveillance data associated with a flight includes position information (e.g., latitude, longitude, and altitude) for an aircraft at various times (e.g., at regular time intervals) over a duration of the flight. In some examples, the surveillance data may also include speeds of the aircraft at the various times over the duration of the flight. In some implementations, the surveillance data includes automatic dependent surveillance-broadcast (ADS-B) data associated with the one or more flights. Additionally, or alternatively, the surveillance data may include radar tracking data and/or other flight tracking data associated with the one or more flights. The flight assessment system obtains the surveillance data from a surveillance data source (or multiple surveillance data sources). In some implementations, the surveillance data source is an open access data source, such as an ADS-B database or repository. In some examples, the flight assessment system may retrieve the surveillance data from the surveillance data source, for example, by transmitting a request for the surveillance data to the surveillance data source and receiving the surveillance data based on the request. In some other examples, the surveillance data source may transmit, and the flight assessment system may receive, the surveillance data without the flight assessment system transmitting a request for the surveillance data (e.g., as a subscription or a broadcast transmission). In some implementations, the flight assessment system obtains (e.g., retrieves or receives) the surveillance data at a regular time interval (e.g., daily), and stores the surveillance data (e.g., in a memory of the flight assessment system).

The surveillance data obtained by the TCI includes surveillance data associated with a target flight to be assessed by the flight assessment system. The surveillance data obtained by the TCI may also include surveillance data associated with one or more other flights in addition to the target flight. In some implementations, the TCI obtains the surveillance data for the target flight after the target flight has ended, in order to assess the operational efficiency and/or environmental impact of the flight operations of the target flight offline after the target flight has ended. In some other implementations, the TCI obtains the surveillance data for the target flight while the target flight is ongoing in order to assess the operational efficiency and/or environmental impact of the flight operations of the target flight in real-time or near real-time during the target flight. In this case, the TCI may obtain the surveillance data (e.g., ADS-B data) by receiving a broadcast of the surveillance data transmitted by the aircraft.

As further shown in Fig. 1A, and by reference number 110, the flight assessment system (e.g., the TCI of the flight assessment system) obtains flight plan data. The flight plan data obtained by the flight assessment system includes the flight plan of the target flight to be assessed by the flight assessment system. In some examples, the flight plan data obtained by the flight assessment system may also include flight plans of one or more other flights. The flight assessment system obtains the flight plan data from a flight plan data source. In some implementations, the flight plan data source is an open access data source, such as a centralized flight plan repository. In some examples, the flight assessment system may retrieve the flight plan data from the flight plan data source, for example, by transmitting a request for the flight plan data to the flight plan data source and receiving the flight plan data based on the request. In some other examples, the flight plan data source may transmit, and the flight assessment system may receive, the flight plan data without the flight assessment system transmitting a request for the flight plan data (e.g., as a subscription or a broadcast transmission). In some implementations, the flight assessment system obtains (e.g., retrieves or receives) the flight plan data at a regular time interval (e.g., daily), and stores the flight plan data (e.g., in a memory of the flight assessment system).

As further shown in Fig. 1A, and by reference number 115, the TCI reconstructs a flown trajectory of a flight (e.g., the target flight) based on the surveillance data associated with the flight. The trajectory of a flight represents the evolution of a state of the aircraft with time (e.g., over the duration of the flight). The state of the aircraft may include the position of the aircraft (e.g., the position of the aircraft's center of gravity), the velocity of the aircraft, the altitude of the aircraft, the mass of the aircraft, fuel consumption of the aircraft, gaseous emissions (e.g., carbon dioxide (CO₂) and/or non-CO₂ emissions) of the aircraft, a cost associated with the flight, noise emissions, and/or other parameters of the aircraft or flight associated with efficiency or environmental impact. TCI reconstructs the flown trajectory of the flight based on the surveillance data associated with the flight, an aircraft performance model associated with an aircraft of the flight, and meteorological information associated with the flight. The flight assessment system may store or have access to a set of aircraft performance models that are associated with different types of aircraft. For example, the set of aircraft performance models may include base of aircraft data (BADA) version 3 or 4 aircraft models, manufacturer-specific aircraft performance models, and/or tail-specific performance models that are generated from quick access recorded data, among other examples. The TCI may obtain the aircraft performance model associated with the aircraft of the fight from the set of aircraft performance models. The meteorological information includes weather data (e.g., temperature, pressure, and/or wind speed, among other examples) associated with the flight. The flight assessment system (e.g., the TCI) obtains the meteorological information from a meteorological data source. For example, the meteorological information may include weather forecasts obtained (e.g., retrieved or received) from the National Oceanic and Atmospheric Administration (NOAA) (e.g., in grib2 format) or another open access meteorological data source.

In some implementations, the TCI uses an aircraft intent inference and trajectory reconstruction (INTRAC) process to reconstruct the flown trajectory of the flight based on the surveillance data, the aircraft performance model, and the meteorological information. In this case, the TCI extracts intent information from the surveillance data associated with the flight, and the TCI reconstructs the flown trajectory of the flight based on the intent information. Intent information is information related to an aircraft intent during the flight. The intent information describes operations for controlling the aircraft within a certain time interval. In some examples, the intent information extracted from the surveillance data includes a series of commands or operations that correspond to how the aircraft was controlled (e.g., by a pilot and/or by a flight management system of the aircraft) over the duration of the flight. For example, the intent information may include operations/commands corresponding to managing a configuration of the aircraft (e.g., when to deploy the landing gear), as well as operations/commands corresponding to operational procedures for controlling the aircraft during the flight (e.g., track a certain turn radius, hold a certain airspeed). The TCI reconstructs the flown trajectory of the flight by integrating equations of motion associated with the aircraft based on the intent information, one or more initial conditions, the aircraft performance model, and the meteorological information. The aircraft performance model provides aircraft-type-specific performance information used by the TCI to integrate the equations of motion. For example, the aircraft performance model may include models of forces that act on the aircraft's center of gravity, such as thrust, draft, lift, and weight. Using the aircraft performance model, the TCI integrates the equations of motion based on forces applied to the aircraft in accordance with the intent information (e.g., based on the operations/commands to control the aircraft) and the meteorological information (e.g., forces due to pressure, temperature, and wind). The initial conditions may include an initial mass of the aircraft, which may vary based on the amount of fuel initially loaded in the aircraft. In some implementations, the TCI uses an initial mass estimation algorithm to infer/estimate the initial mass of the aircraft based on the intent information, the surveillance data, the aircraft performance model, and the meteorological information. In this case, the TCI iteratively integrates the equations of motion based on an initial mass estimate, the intent information, the aircraft performance model, and the meteorological information, and adjusts the initial mass estimate used for integrating the equations of motion until the initial mass estimate converges to a value that results in the flown trajectory that best fits the surveillance data.

The reconstruction of the flown trajectory of the flight results in an aircraft state vector associated with the flown trajectory. The aircraft state vector includes values of various parameters of the aircraft over the duration of the flight. In some implementations, the aircraft state vector includes values for the aircraft position, the aircraft velocity, the aircraft altitude, and at least one of: the aircraft mass, aircraft fuel consumption, or gaseous emissions (e.g., carbon dioxide (CO₂) and/or non-CO₂ emissions) of the aircraft. In some examples, the gaseous emissions of the aircraft may be calculated using an aircraft emission model or process, such as EUROCONTROL corrected - Boeing fuel flow method 2 (EEC-BFM2). In some examples, the aircraft fuel consumption may be calculated using the aircraft performance model based on the intent information and the meteorological information, and the aircraft mass may be calculated based on the estimated initial mass for the aircraft and the aircraft fuel consumption. In some implementations, the aircraft state vector may further include values for an operating cost associated with the flight. For example, as shown in Fig. 1A, the reconstruction of the flown trajectory may be based on a cost model. In this case, the TCI uses the cost model to determine operating costs of the flight. In some examples, the cost model may determine a cost index as a function of the speed and altitude of the aircraft during the flight. The cost model may incorporate or relate to the cost of fuel, air navigation service provider (ANSP) fees, and/or costs (e.g., fines or fees) associated with an environmental impact of the flight. In some implementations, the aircraft state vector may further include values for aircraft noise emissions and/or other parameters associated with efficiency or environmental impact. For example, the aircraft noise emissions may be calculated using the aircraft performance model or a separate noise model associated with the aircraft.

As further shown in Fig. 1A, and by reference number 120, the TCI generates one or more reference trajectories for the flight (e.g., the target flight). The TCI may generate one or more reference trajectories for the flight based on the surveillance data and/or the flight plan data. A reference trajectory for a flight is a trajectory that serves as a basis for comparison with the reconstructed flown trajectory of the flight to assess the operational efficiency and/or environmental impact of the flight. In some implementations, the TCI generates multiple reference trajectories for the flight. The reference trajectories may include: a flight plan trajectory associated with the flight plan for the flight, one or more reference trajectories corresponding to other flights (e.g., competitors' flights), or one or more reference trajectories corresponding to hypothetical (e.g., what-if) scenarios associated with the flight. In some implementations, the TCI generates the reference trajectories based on the surveillance data or the flight plan data, one or more aircraft performance models, the meteorological information, and the initial mass estimated for reconstructing the flown trajectory.

The flight plan trajectory represents the trajectory for the flight with no changes to the flight plan for the flight (e.g., if the flight operations during the flight followed the flight plan exactly). The TCI generates the flight plan trajectory for the flight based on the flight plan of the flight, the aircraft performance model of the aircraft for the flight, the meteorological information associated with the flight, and the estimated initial mass of the aircraft used for reconstructing the flown trajectory of the flight. For example, the TCI may reconstruct the flight plan trajectory based on the flight plan data similarly to the reconstruction of the flown trajectory based on the surveillance data described above.

The TCI may generate one or more reference trajectories corresponding to other flights (e.g., flights other than the target flight for which the flown trajectory is reconstructed). For example, the TCI may generate respective reference trajectories for one or more competitors' flights with the same origin and destination as the target flight. The TCI generates a reference trajectory corresponding to another flight (e.g., a flight other than the target flight) based on surveillance data associated with the other flight, an aircraft performance model (e.g., obtained from the set of aircraft performance models) associated with an aircraft of the other flight, and meteorological information associated with the other flight. In this case, the TCI may generate the reference trajectory by reconstructing the flown trajectory for the other flight similarly to the reconstruction described above for the target flight.

The TCI may generate one or more reference trajectories corresponding to hypothetical (e.g., what-if) scenarios associated with the flight based on the intent information extracted from the surveillance data associated with the flight, the estimated initial mass of the aircraft used for reconstructing the flown trajectory of the flight, the meteorological information associated with the flight, and at least one of the aircraft performance model associated with the aircraft of the flight or another aircraft performance model. In some implementations, the TCI uses an aircraft intent generation and trajectory synthesis (INCEPT) procedure and/or an intent-based trajectory optimization (INTRO) procedure to generate the reference trajectories to be compared with the flown trajectory. In such examples, the TCI generates different reference trajectories with variations to the intent information, the initial conditions (e.g., the initial aircraft mass), and/or the aircraft performance model used for reconstructing the flown trajectory of the flight. In some examples, the TCI may generate one or more reference trajectories, using the same meteorological information, initial aircraft mass estimate, and aircraft performance model as used for reconstructing the flown trajectory, by varying the intent information extracted from the surveillance data to represent changes to the way the aircraft was controlled during the flight. In some other examples, the TCI may generate one or more reference trajectories, using the same meteorological information, intent information, and aircraft performance model as used for reconstructing the flown trajectory, by varying the initial aircraft mass estimate from the surveillance data to represent changes to the initial amount of fuel loaded in the aircraft. In some other examples, the TCI may generate one or more reference trajectories, using the same meteorological information, intent information, and initial aircraft mass estimate as used for reconstructing the flown trajectory, and using a different aircraft performance model (e.g., obtained from the set of aircraft performance models) associated with a different type of aircraft from the aircraft of the flight. In some examples, the TCI may vary a combination of the intent information, the initial aircraft mass estimate, and/or the aircraft performance model to generate one or more reference trajectories.

In some implementations, the TCI generates different reference trajectories that are associated with different metrics of interest. In this case, the TCI uses the INCEPT procedure and/or the INTRO procedure to determine the optimal reference trajectory for a metric of interest. In some examples, the TCI may generate an optimal distance trajectory (e.g., a reference trajectory associated with an optimal/minimal distance), an optimal cost trajectory (e.g., a reference trajectory associated with an optimal/minimal cost), and/or an optimal fuel trajectory (e.g., a reference trajectory associated with an optimal/minimal fuel consumption). Additionally, or alternatively, in some examples, the TCI may generate a reference trajectory associated with an optimal environmental impact (e.g., an optimal CO₂ emissions level or an optimal non-CO₂ environmental impact), a reference trajectory associated with an optimum noise level, and/or an optimal reference trajectory associated with another metric related to operational efficiency or environmental impact. In some implementations, as shown in Fig. 1A, the generation of the flown trajectory may be based on the cost model. For example, the TCI may use the cost model for determining the optimal cost trajectory.

The generation of a reference trajectory results in a reference aircraft state vector associated with the reference trajectory. The reference aircraft state vector includes values for various parameters of the aircraft over the duration of the flight. The reference aircraft state vector includes values for the same parameters as the aircraft state vector associated with the flown trajectory. In some implementations, the reference aircraft state vector includes values for the aircraft position, the aircraft velocity, the aircraft altitude of the aircraft, and at least one of: the aircraft mass, aircraft fuel consumption, or gaseous emissions (e.g., CO₂ and/or non-CO₂ emissions) of the aircraft. In some implementations, the reference aircraft state vector may further include values for an operating cost (e.g., based on the cost model). In this case, the TCI uses the cost model to determine operating costs for the reference trajectories. In some implementations, the reference aircraft state vector may further include values for aircraft noise emissions and/or other parameters associated with efficiency or environmental impact.

As shown in Fig. 1A, the TCI outputs, to the trajectory assessment module, the aircraft state vector (shown by reference number 125) associated with the flown trajectory and respective reference aircraft state vectors (shown by reference number 130) associated with the one or more reference trajectories. As further shown in Fig. 1A, and by reference number 135, the trajectory assessment module calculates performance indicators (e.g., key performance indicators (KPIs)) for the flight based on the flown trajectory of the flight and the one or more reference trajectories for the flight. The trajectory assessment module calculates the one or more performance indicators based on a comparison of the flown trajectory to the one or more reference trajectories. For example, the trajectory assessment module may calculate each performance indicator based on a comparison of the aircraft state vector associated with the flown trajectory to a reference state model associated with a reference trajectory. In some implementations, the trajectory assessment module calculates multiple performance indicators for the flight, and each performance indicator indicates a relative value for the flown trajectory, as compared with a reference trajectory, for a certain performance metric. Because the same TCI is used for reconstructing the flown trajectory and generating the reference trajectories, calculating the relative performance indicators based on comparisons of the flown trajectory to the reference trajectories increases robustness to modeling errors.

The trajectory assessment module may calculate a respective set of performance indicators associated with each of one or more performance metrics, such as distance, flight level (e.g., altitude), fuel consumption, cost, gaseous emissions (e.g., CO₂ emissions and/or non-CO₂ emissions), and/or noise, among other examples. Each performance indicator, in the set of performance indicators associated with a performance metric, is based on a comparison of the performance metric in the flown trajectory and a respective performance metric of one of the reference trajectories. In some implementations, the trajectory assessment module calculates one or more distance indicators based on a comparison of a distance associated with the flown trajectory and respective distances associated with one or more reference trajectories. For example, the trajectory assessment module may calculate a set of distance indicators including $D - OD = \left(\frac{{d}^{rec}}{{d}^{OD}}-1\right) ∗ 100$, where *d^{rec}* is the distance flown by the reconstructed flown trajectory and *d^{OD}* is the distance flown by the optimal distance trajectory (e.g., the reference trajectory associated with the optimal distance); $D - FP = \left(\frac{{d}^{rec}}{{d}^{FP}}-1\right) ∗ 100$, where *d^{FP}* is the distance flown by the flight plan trajectory (e.g., the reference trajectory generated based on the flight plan); and $D - OC = \left(\frac{{d}^{rec}}{{d}^{OC}}-1\right) ∗ 100$, where *d^{OC}* is the distance flown by the optimal cost trajectory (e.g., the reference trajectory associated with the optimal cost). Additionally, or alternatively, in some implementations, the trajectory assessment module calculates one or more flight level indicators based on a comparison of a flight level (e.g., altitude) associated with the flown trajectory and respective flight levels associated with one or more reference trajectories. For example, the trajectory assessment module may calculate a set of flight level indicators including $FL - FP = \left(\frac{{FL}^{rec}}{{FL}^{FP}}-1\right) ∗ 100$, where *FL^{rec}* is the average flight level of the reconstructed flown trajectory and *FL^{FP}* is the average flight level of the flight plan trajectory; $FL - OF = \left(\frac{{FL}^{rec}}{{FL}^{OF}}-1\right) ∗ 100$, where *FL^{OF}* is the average flight level of the optimal fuel trajectory (e.g., the reference trajectory associated with optimal fuel consumption); and $D - OC = \left(\frac{{FL}^{rec}}{{FL}^{OC}}-1\right) ∗ 100$, where *FL^{OC}* is the average flight level of the optimal cost trajectory.

Additionally, or alternatively, in some implementations, the trajectory assessment module calculates one or more fuel consumption indicators based on a comparison of a fuel consumption associated with the flown trajectory and respective fuel consumptions associated with one or more reference trajectories. For example, the trajectory assessment module may calculate a set of fuel consumption indicators including $F - FP = \left(\frac{{fuel}^{rec}}{{fuel}^{FP}}-1\right) ∗ 100$ , where *fuel^{rec}* is the fuel consumption of the reconstructed flown trajectory and *fuel^{FP}* is the fuel consumption of the flight plan trajectory; $F - OF = \left(\frac{{fuel}^{rec}}{{fuel}^{OF}}-1\right) ∗ 100$, where *fuel^{OF}* is the fuel consumption of the optimal fuel trajectory; and $F - OC = \left(\frac{{fuel}^{rec}}{{fuel}^{OC}}-1\right) ∗ 100$ , where *fuel^{OC}* is the fuel consumption of the optimal cost trajectory.

Additionally, or alternatively, in some implementations, the trajectory assessment module calculates one or more cost indicators based on a comparison of a cost associated with the flown trajectory and respective costs associated with one or more reference trajectories. For example, the trajectory assessment module may calculate a set of cost indicators including C- $FP = \left(\frac{{cost}^{rec}}{{cost}^{FP}}-1\right) ∗ 100$, where *cost^{rec}* is cost of the reconstructed flown trajectory and *cost^{FP}*is the cost of the flight plan trajectory; $C - OF = \left(\frac{{cost}^{rec}}{{cost}^{OF}}-1\right) ∗ 100$, where *cost^{OF}* is the cost of the optimal fuel trajectory; and $C - OC = \left(\frac{{cost}^{rec}}{{cost}^{OC}}-1\right) ∗ 100$, where *cost^{OC}* is the cost of the optimal cost trajectory. As shown in Fig. 1A, the trajectory assessment module may obtain (e.g., from one or more data sources) fuel cost information, ANSP fee information, and/or a cost model, and the trajectory assessment module may determine the cost of the trajectories (e.g., the reconstructed flown trajectory and the reference trajectories based on the fuel cost information, the ANSP fee information, and/or the cost model). In one example, the trajectory assessment module may calculate the cost of a trajectory as *Cost = fuel + CI * time* + *RC,* where *fuel* is the fuel cost for the trajectory (e.g., based on the fuel consumption of the trajectory and the fuel cost information), *CI* is a cost index of the flight (e.g., based on the cost model), and *RC* is the route charges (e.g., based on the ANSP fee information).

Additionally, or alternatively, the trajectory assessment may calculate one or more environmental impact indicators based on a comparison of a carbon dioxide (CO₂) or non-CO₂ environmental effect (e.g., CO₂ emissions or non-CO₂ gaseous emissions) associated with the flown trajectory and respective CO₂ or non-CO₂ environmental effects associated with one or more reference trajectories, one or more noise indicators based on a comparison of a noise level associated with the flown trajectory and respective noise levels associated with the one or more reference trajectories, and/or one or more other performance indicators based on a comparison of a performance metric in the flown trajectory and one or more reference trajectories.

In some implementations, the TCI may reconstruct flown trajectories and generate reference trajectories for multiple flights with a common characteristic (e.g., the same origin and destination), and the trajectory assessment module may group the reconstructed flown trajectories together and calculate one or more performance indicators based on a comparison of the grouped flown trajectories to one or more reference trajectories. For example, the trajectory assessment module may calculate one or more performance indicators based on a comparison of an average performance metric in the group of flown trajectories with the performance metric in one or more reference trajectories.

As shown by reference number 140, the flight assessment system (e.g., the trajectory assessment module of the flight assessment system) outputs the one or more performance indicators (e.g., a set of performance indicators) calculated by the trajectory assessment module. As shown in Fig. 1A, in some implementations, the flight assessment system transmits the performance indicators to the communication device.

As further shown in Fig. 1A, and by reference number 145, the trajectory assessment module determines one or more corrective actions based on the performance indicators. In some implementations, the trajectory assessment module may detect one or more inefficiencies (e.g., operational inefficiencies and/or environmental inefficiencies) associated with the flown trajectory based on the performance indicators. For example, the trajectory assessment module may determine that the flown trajectory is associated with a longer distance, a higher fuel consumption, a higher cost, a greater environmental impact (e.g., greater CO₂ or non-CO₂ emissions), or a greater noise level, among other examples, as compared with one or more of the reference trajectories. The trajectory assessment module, in connection with detecting the one or more inefficiencies, may determine one or more corrective actions for the one or more inefficiencies. In some examples, the trajectory assessment module may determine the one or more corrective actions based on a comparison of the flown trajectory with one or more of the reference trajectories. For example, the trajectory assessment module may determine one or more changes in flight operations that correct inefficiencies. In some examples, the trajectory assessment module, in connection with detecting the one or more inefficiencies, may derive one or more reasons (e.g., airspace restrictions, air traffic controller interventions, or inefficient planning, among other examples) for the inefficiencies. For example, the trajectory assessment module may derive the one or more reasons based on a comparison of the flown trajectory with the flight plan trajectory and/or one or more other reference trajectories. The trajectory assessment module may then determine the one or more corrective actions based on the one or more reasons.

In some implementations, the reconstruction of the flown trajectory for a flight, the generation of the reference trajectories, the calculation of the performance indicators, and the determination of the one or more corrective actions are performed after the flight has been completed (e.g., to assess the operational efficiency and/or the environmental impact of the completed flight). In this case, the one or more corrective actions are corrective actions to be applied for one or more subsequent flights (e.g., subsequent flights with the same origin and destination as the target flight). In some other implementations, the reconstruction of the flown trajectory for a flight, the generation of the reference trajectories, the calculation of the performance indicators, and the determination of the one or more corrective actions are performed during the flight (e.g., for real-time or near real-time assessment of the operational efficiency and/or the environmental impact of the flight). In this case, the reconstructed flown trajectory is a flown trajectory of a part of the flight, and the one or more corrective actions are to be applied for the current flight (e.g., to improve the operational efficiency and/or the environmental impact for the remainder of the flight).

As shown by reference number 150, the flight assessment system (e.g., the trajectory assessment module of the flight assessment system) outputs the one or more corrective actions. As shown in Fig. 1A, in some implementations, the flight assessment system transmits the one or more corrective actions to the communication device.

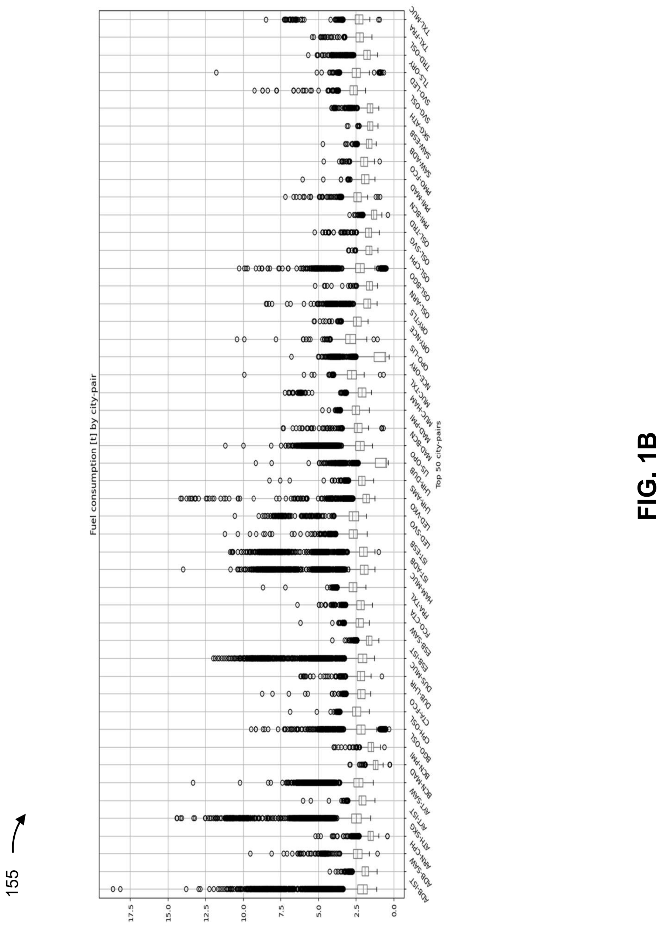

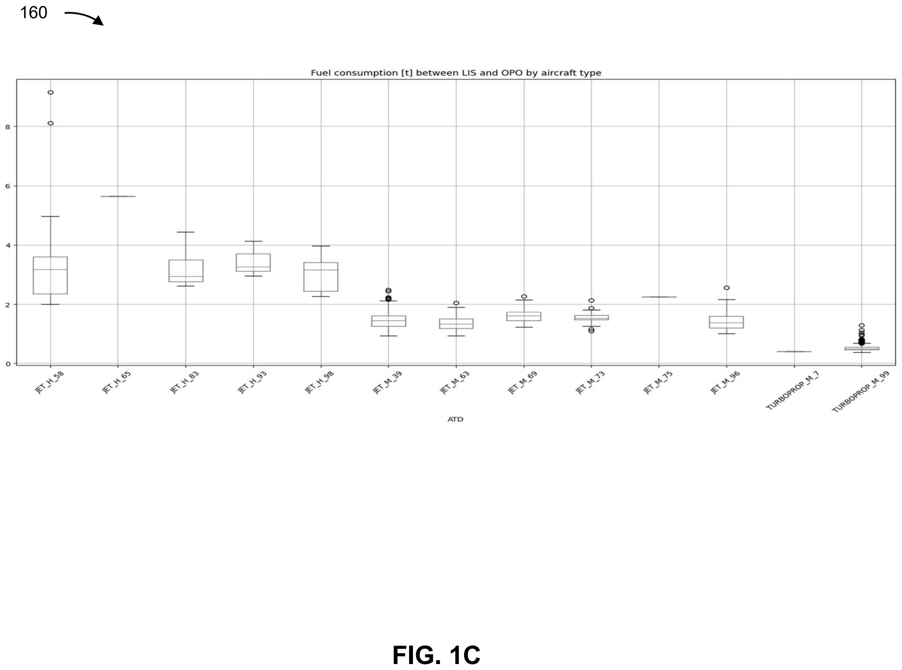

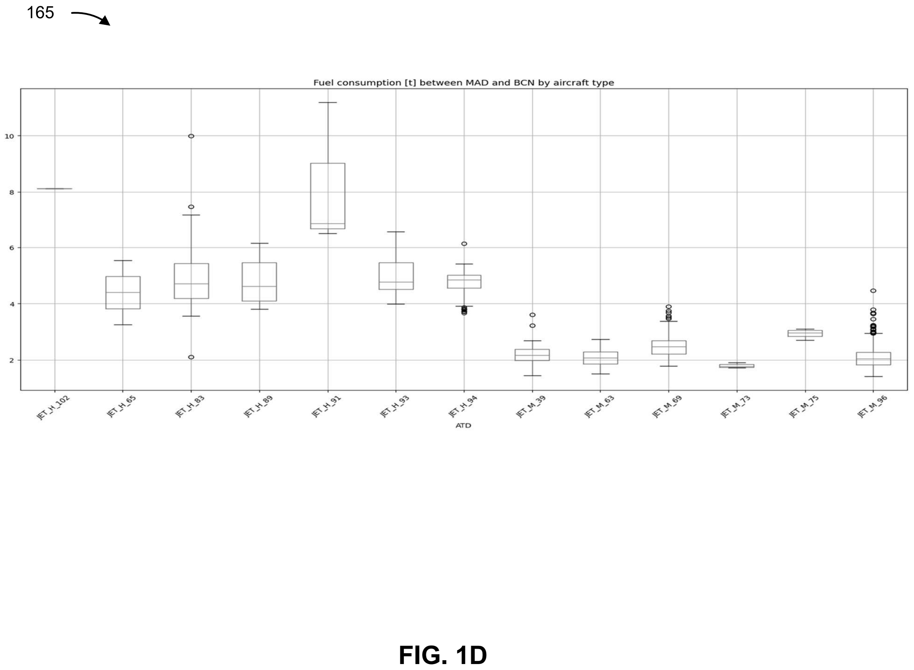

The communication device may be a communication device associated with an aircraft or a communication device associated with an AU. In some implementations, the flight assessment system transmits the one or more corrective actions to the communication device, one or more aircrafts, and/or one or more other devices associated with the AU or an aircraft to perform or apply the one or more corrective actions. In a case in which the corrective actions are for the one or more subsequent flights, the communication device may apply or perform, or cause another device to apply or perform, the one or more corrective actions during flight planning for the one or more subsequent flights and/or during in-flight operations of the one or more subsequent flights. In a case in which the corrective actions are for a current flight (e.g., the corrective actions are determined based on real-time or near real-time assessment of the operational efficiency and/or environmental impact of the flight), the communication device may control the aircraft of the flight to perform the corrective actions. Figs. 1B-1D show examples 155, 160, and 170 of results of reconstructing flown trajectories of flights in air traffic in Europe. Example 155 of Fig. 1B shows the fuel consumption of the reconstructed flown trajectories grouped by origin-destination for 50 city pairs. As shown in example 155, the average fuel consumption of all city-pairs varies between 2.3 megatons (Mt) and 2.6 Mt, with a large quantity of outliers. This large variation in the values may correspond to the use of different aircraft types, which can be observed in Figs. 1C and 1D. The flown trajectories between Lisbon and Porto (e.g., the OPO-LIS city pair) have a very low average fuel consumption (e.g., due to the small distance separating the cities), but the outliers for this city pair exceed 5 Mt of fuel consumption.

Example 160 of Fig. 1C shows the fuel consumption of the reconstructed flown trajectories between Lisbon and Porto (e.g., the OPO-LIS city pair) grouped by aircraft types. The nomenclature, used in Figs. 1C and 1D, for the aircraft types follows the format of: EngineType_WakeTurbulenceCategory_Integer. Engine_type indicates an engine type of the aircraft and can be one of the following: JET, TURBOPROP, or PISTON; WakeTurbulenceCategory indicates a wake turbulence category of the aircraft, which is directly linked to the size of the aircraft, and can be: L (light), M (medium), H (heavy), or J (jumbo); and the Integer is an integer ranging from 0 to 103. As shown in example 160, the flights between Lisbon and Porto are most often flown using small aircraft, such as medium turboprops and jets, but larger jets, such as JET_H_58, are also used to transport cargo between Lisbon and Porto.

Example 165 of Fig. 1D shows the fuel consumption of the reconstructed flown trajectories between Madrid and Barcelona (e.g., the MAD-BCN city pair) grouped by aircraft types. As shown in example 165, the dispersion and the outlier values for the fuel consumption of the reconstructed flown trajectories between Madrid and Barcelona are due to differences in aircraft sizes used for the flights between the two cities. However, in this example, the larger jets (e.g., JET_H_89 and JET_H_91) are passenger aircraft rather than cargo aircraft.

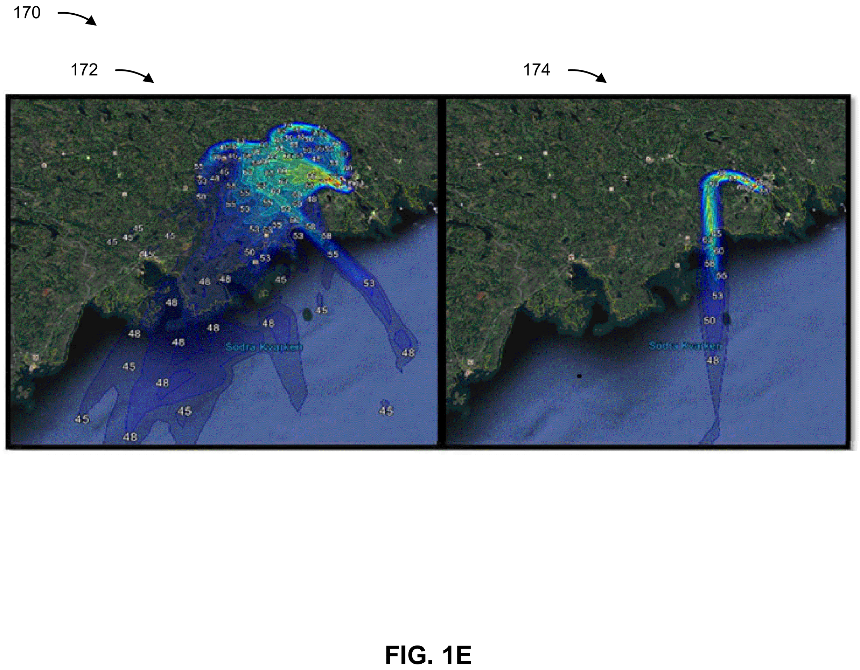

Figs. 1E shows an example 170 of a comparison of an environmental impact of reconstructed flown trajectories of flights arriving at an airport in Sweden and an environmental impact of a reference trajectories that correspond to the flights arriving at the airport in accordance with a new operational procedure. As shown in example 170, a first noise footprint 172 shows noise levels surrounding the airport for the reconstructed flown trajectories of multiple flights arriving at the airport. A second noise footprint 174 shows noise levels for the reference trajectories of the flights that correspond to the flights landing at the airport in accordance with the new operational procedure.

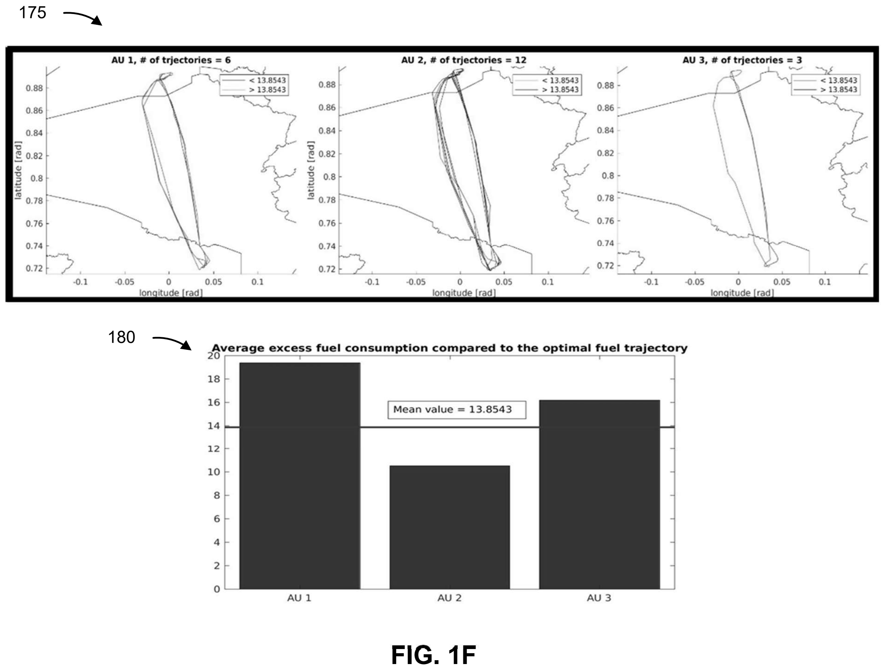

Figs. 1F-1G show examples 175, 180, and 185 associated with reconstructed flown trajectories for flights between Barcelona and London Gatwick associated with three different AUs (e.g., AU 1, AU 2, and AU 3). As shown in example 175 of Fig. 1F, flown trajectories are reconstructed for 6 flights associated with AU 1 flying, 12 flights associated with AU 2, and 3 flights associated with AU 3. In this example, a fuel efficiency indicator is calculated by comparing the fuel consumption of the flown trajectories to the fuel consumption of a reference trajectory (e.g., an optimal fuel reference trajectory). Example 180 of Fig. 1F shows the average value (e.g., 13.8543) of the fuel efficiency indicator per AU. As shown in example 180, the flown trajectories for AU 2 burn less fuel than the average in this city pair, the flown trajectories for AU 1 and AU 3 burn more fuel than the average in this city pair, and the flown trajectories for AU 1 burn more fuel than the flown trajectories for AU 2 and AU 3. Based on this assessment of fuel efficiency, the flight assessment system may determine corrective actions to improve the operations for AU 1 and/or AU 3 and in order to increase fuel efficiency for future flights between Barcelona and London Gatwick.

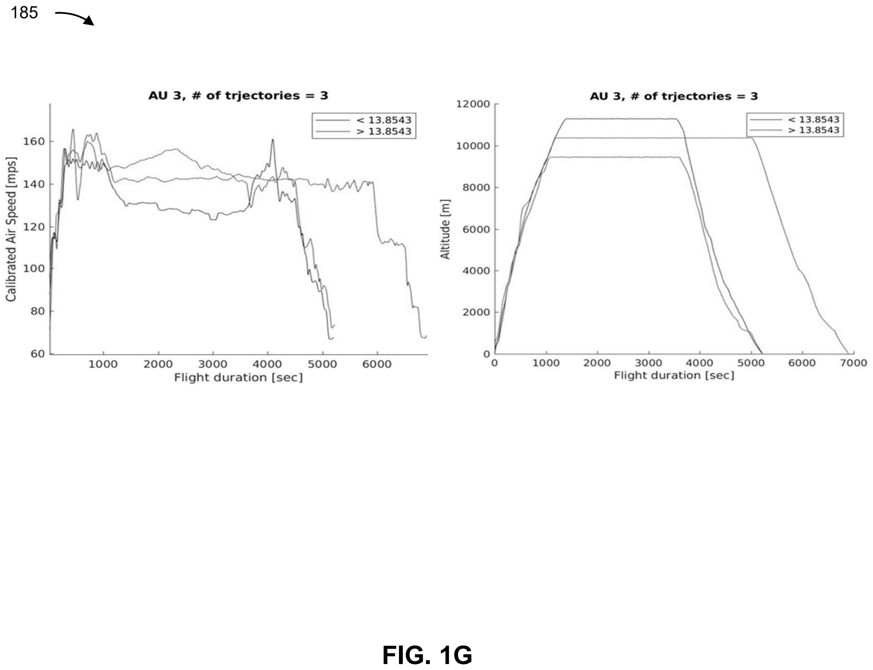

Example 185 of Fig. 1G shows a speed profile (left) and an altitude profile (right) of the reconstructed flown trajectories for the flights associated with AU 3. As shown in example 185, the flown trajectories for AU 3 include two inefficient flown trajectories with fuel efficiency indications that are greater than the average fuel efficiency indication value and one efficient trajectory with a fuel efficiency indication that is less than the average fuel efficiency indication value. In this example, by comparing the altitude and speed profiles of the inefficient flown trajectories and the efficient flown trajectories, the flight assessment system may determine that the efficient trajectory flies at higher altitude and lower average speeds. Accordingly, the flight assessment system may determine corrective actions to control subsequent flights between Barcelona and London Gatwick for AU 3 to fly at higher altitude and lower average speeds. Additionally, or alternatively, the flight assessment system may determine whether airspace and air traffic controller actions are affecting the fuel efficiency of the flight between Barcelona and London Gatwick for AU 3.

As indicated above, Figs. 1A-1G are provided as an example. Other examples may differ from what is described with regard to Figs. 1A-1G. The number and arrangement of devices shown in Figs. 1A-1G are provided as an example. In practice, there may be additional devices, fewer devices, different devices, or differently arranged devices than those shown in Figs. 1A-1G. Furthermore, two or more devices shown in Figs. 1A-1G may be implemented within a single device, or a single device shown in Figs. 1A-1G may be implemented as multiple, distributed devices. Additionally, or alternatively, a set of devices (e.g., one or more devices) shown in Figs. 1A-1G may perform one or more functions described as being performed by another set of devices shown in Figs. 1A-1G.

Fig. 2 is a diagram of an example environment 200 in which systems and/or methods described herein may be implemented. As shown in Fig. 2, environment 200 may include a flight assessment system 210, a TCI 220, a trajectory assessment module 230, a communication device 240, one or more data sources 250, and a network 260. Devices of environment 200 may interconnect via wired connections, wireless connections, or a combination of wired and wireless connections.

The flight assessment system 210 includes one or more devices capable of receiving, generating, storing, processing, and/or providing information, as described elsewhere herein. The flight assessment system 210 may include a communication device and/or a computing device. For example, the flight assessment system 210 may include a server, such as an application server, a client server, a web server, a database server, a host server, a proxy server, a virtual server (e.g., executing on computing hardware), or a server in a cloud computing system. In some implementations, the flight assessment system 210 may include computing hardware used in a cloud computing environment, such as one or more serverless components (e.g., one or more serverless functions), among other examples. In some implementations, the flight assessment system 210 may include a wireless communication device, a mobile phone, a user equipment, a laptop computer, a tablet computer, a desktop computer, or a similar type of device. The flight assessment system 210 includes the TCI 220 and the trajectory assessment module 230, which may be implemented on separate devices within the flight assessment system 210 or on the same device or devices within the flight assessment system 210. The flight assessment system 210 may communicate with one or more other devices of environment 200, as described elsewhere herein The TCI 220 includes one or more devices capable of receiving, generating, storing, processing, and/or providing information, as described elsewhere herein. The TCI 220 may include a communication device and/or a computing device. For example, the TCI 220 may include a server, such as an application server, a client server, a web server, a database server, a host server, a proxy server, a virtual server (e.g., executing on computing hardware), or a server in a cloud computing system. In some implementations, the TCI 220 may include computing hardware used in a cloud computing environment, such as one or more serverless components (e.g., one or more serverless functions), among other examples. In some implementations, the TCI 220 may include a wireless communication device, a mobile phone, a user equipment, a laptop computer, a tablet computer, a desktop computer, or a similar type of device. The TCI 220 may communicate with one or more other devices of environment 200, as described elsewhere herein.

The trajectory assessment module 230 includes one or more devices capable of receiving, generating, storing, processing, and/or providing information, as described elsewhere herein. The trajectory assessment module 230 may include a communication device and/or a computing device. For example, the trajectory assessment module 230 may include a server, such as an application server, a client server, a web server, a database server, a host server, a proxy server, a virtual server (e.g., executing on computing hardware), or a server in a cloud computing system. In some implementations, the trajectory assessment module 230 may include computing hardware used in a cloud computing environment, such as one or more serverless components (e.g., one or more serverless functions), among other examples. In some implementations, the trajectory assessment module 230 may include a wireless communication device, a mobile phone, a user equipment, a laptop computer, a tablet computer, a desktop computer, or a similar type of device. The trajectory assessment module 230 may communicate with one or more other devices of environment 200, as described elsewhere herein.

The communication device 240 includes one or more devices capable of receiving, generating, storing, processing, and/or providing information, as described elsewhere herein.

In some implementations, the communication device 240 may be a computing device, a server device, a wireless communication device, a mobile phone, a user equipment, a base station, a laptop computer, a tablet computer, a desktop computer, a gaming console, a set-top box, a wearable communication device (e.g., a smart wristwatch, a pair of smart eyeglasses, a head mounted display, or a virtual reality headset), or a similar type of device. In some implementations, the communication device 240 may a communication device on or associated with an aircraft. The communication device 240 may communicate with one or more other devices of environment 200, as described elsewhere herein.

The data source(s) 250 may include one or more devices capable of receiving, generating, storing, processing, and/or providing information as described elsewhere herein. For example, the data source(s) 250 may store and provide, to the flight assessment system, information such as surveillance data, flight plan data, aircraft performance models, meteorological information, cost models, fuel cost information, and/or ANSP fee information, among other examples, as described elsewhere herein. The data source(s) 250 may include a communication device and/or a computing device. For example, the data source(s) 250 may include a database, a server, a database server, an application server, a client server, a web server, a host server, a proxy server, a virtual server (e.g., executing on computing hardware), a server in a cloud computing system, a device that includes computing hardware used in a cloud computing environment, or a similar type of device. The data source(s) 250 may communicate with one or more other devices of environment 200, as described elsewhere herein.

The network 260 includes one or more wired and/or wireless networks. For example, the network 260 may include a wireless wide area network (e.g., a cellular network or a public land mobile network), a satellite network, a local area network (e.g., a wired local area network or a wireless local area network (WLAN), such as a Wi-Fi network), a personal area network (e.g., a Bluetooth network), a near-field communication network, a telephone network, a private network, the Internet, and/or a combination of these or other types of networks. The network 260 enables communication among the devices of environment 200. The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with a system to assess operational efficiency and environmental impact of flights. The device 300 corresponds to one or more of the flight assessment system 210, the TCI 220, the trajectory assessment module 230, the communication device 240, and/or the data source(s) 250. In some implementations, the flight assessment system 210, the TCI 220, the trajectory assessment module 230, the communication device 240, and/or the data source(s) 250 include one or more devices 300 and/or one or more components of the device 300. In the example shown in Fig. 3, the device 300 includes a bus 310, a processor 320, a memory 330, an input component 340, an output component 350, and/or a communication component 360.

The bus 310 includes one or more components that enable wired and/or wireless communication among the components of the device 300. The bus 310 couples together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 includes a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory, such as random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). In some implementations, the memory 330 is a non-transitory computer-readable medium. The memory 330 stores information, one or more instructions, and/or software (e.g., one or more software applications) related to the operation of the device 300. In some implementations, the memory 330 includes one or more memories that are coupled (e.g., communicatively coupled) to one or more processors (e.g., processor 320), such as via the bus 310. Communicative coupling between a processor 320 and a memory 330 enables the processor 320 to read and/or process information stored in the memory 330 and/or to store information in the memory 330.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna.

In some implementations, the device 300 performs one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry is used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

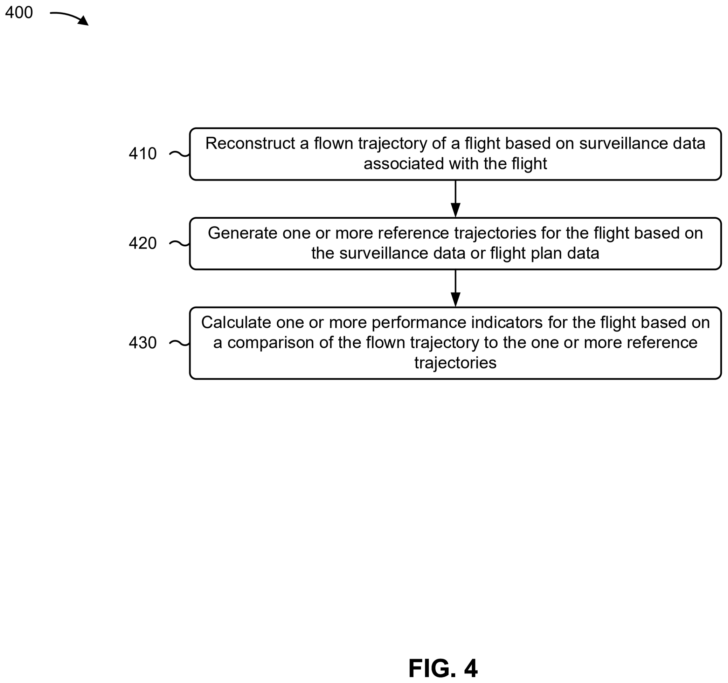

Fig. 4 is a flowchart of an example process 400 associated with a system to assess operational efficiency and environmental impact of flights. One or more process blocks of Fig. 4 are performed by a flight assessment system (e.g., flight assessment system 210) and/or by another device or a group of devices separate from or including the flight assessment system, such as a TCI (e.g., TCI 220), a trajectory assessment module (e.g., trajectory assessment module 230), a communication device (e.g., communication device 240), and/or a data source (e.g., data source 250). Additionally, or alternatively, one or more process blocks of Fig. 4 may be performed by one or more components of device 300, such as processor 320, memory 330, input component 340, output component 350, and/or communication component 360. As shown in Fig. 4, process 400 includes reconstructing a flown trajectory of a flight based on surveillance data associated with the flight (block 410). For example, the flight assessment system may reconstruct a flown trajectory of a flight based on surveillance data associated with the flight, as described above.

As further shown in Fig. 4, process 400 includes generating one or more reference trajectories for the flight based on the surveillance data or flight plan data (block 420). For example, the flight assessment system may generate one or more reference trajectories for the flight based on the surveillance data or flight plan data, as described above.

As further shown in Fig. 4, process 400 includes calculating one or more performance indicators for the flight based on a comparison of the flown trajectory to the one or more reference trajectories (block 430). For example, the flight assessment system may calculate one or more performance indicators for the flight based on a comparison of the flown trajectory to the one or more reference trajectories, as described above.

Process 400 may include additional aspects, such as any single aspect or any combination of aspects described below and/or in connection with one or more other processes described elsewhere herein.

In a first aspect, reconstructing the flown trajectory of the flight includes reconstructing the flown trajectory of the flight based on the surveillance data, an aircraft performance model associated with an aircraft of the flight, and meteorological information associated with the flight.

In a second aspect, alone or in combination with the first aspect, generating the one or more reference trajectories for the flight includes generating the one or more reference trajectories for the flight based on the meteorological information and at least one of the aircraft performance model associated with the aircraft of the flight or one or more other aircraft performance models.

In a third aspect, alone or in combination with one or more of the first and second aspects, reconstructing the flown trajectory of the flight is further based on a cost model, and generating the one or more reference trajectories for the flight is further based on the cost model.

In a fourth aspect, alone or in combination with one or more of the first through third aspects, reconstructing the flown trajectory of the flight includes reconstructing the flown trajectory of the flight based on aircraft intent information extracted from the surveillance data and one or more initial conditions associated with the flight, wherein the one or more initial conditions includes an initial mass of an aircraft of the flight.

In a fifth aspect, alone or in combination with one or more of the first through fourth aspects, generating the one or more reference trajectories for the flight includes generating the one or more reference trajectories for the flight based on the aircraft intent information and the initial mass.

In a sixth aspect, alone or in combination with one or more of the first through fifth aspects, reconstructing the flown trajectory of the flight includes estimating the initial mass based on the aircraft intent information, the surveillance data, meteorological information associated with the flight, and a performance model associated with the aircraft of the flight.

In a seventh aspect, alone or in combination with one or more of the first through sixth aspects, reconstructing the flown trajectory of the flight results in an aircraft state vector associated with the flown trajectory, generating the one or more reference trajectories for the flight results in respective reference aircraft state vectors associated with the one or more reference trajectories, and each performance indicator, of the one or more performance indicators, is based on a comparison of the aircraft state vector associated with the flown trajectory and the respective reference aircraft state vector associated with a reference trajectory of the one or more reference trajectories.

In an eighth aspect, alone or in combination with one or more of the first through seventh aspects, each aircraft state vector, of the aircraft state vector associated with the flown trajectory and the respective reference aircraft state vectors associated with the one or more reference trajectories, includes values for one or more of aircraft mass, fuel consumption, gaseous emissions, cost, or noise.

In a ninth aspect, alone or in combination with one or more of the first through eighth aspects, the one or more reference trajectories include one or more of a flight plan trajectory for the flight, an optimal distance trajectory for the flight, an optimal cost trajectory for the flight, an optimal fuel consumption trajectory for the flight, an optimal emissions trajectory for the flight, or an optimal noise trajectory for the flight.

In a tenth aspect, alone or in combination with one or more of the first through ninth aspects, the one or more performance indicators includes at least one of one or more distance indicators based on a comparison of a distance associated with the flown trajectory and respective distances associated with the one or more reference trajectories, one or more flight level indicators based on a comparison of a flight level associated with the flown trajectory and respective flight levels associated with the one or more reference trajectories, one or more fuel consumption indicators based on a comparison of a fuel consumption associated with the flown trajectory and respective fuel consumptions associated with the one or more reference trajectories, one or more cost indicators based on a comparison of a cost associated with the flown trajectory and respective costs associated with the one or more reference trajectories, one or more environmental impact indicators based on a comparison of a CO₂ or non-CO₂ environmental effect associated with the flown trajectory and respective CO₂ or non-CO₂ environmental effects associated with the one or more reference trajectories, or one or more noise indicators based on a comparison of a noise level associated with the flown trajectory and respective noise levels associated with the one or more reference trajectories. In an eleventh aspect, alone or in combination with one or more of the first through tenth aspects, process 400 includes determining one or more corrective actions for the flight or a subsequent flight based on the one or more performance indicators.

In a twelfth aspect, alone or in combination with one or more of the first through eleventh aspects, reconstructing the flown trajectory for the flight includes reconstructing the flown trajectory for the flight during the flight, and process 400 includes controlling an aircraft of the flight, during the flight, in accordance with the one or more corrective actions.

Although Fig. 4 shows example blocks of process 400, in some implementations, process 400 includes additional blocks, fewer blocks, different blocks, or differently arranged blocks than those depicted in Fig. 4. Additionally, or alternatively, two or more of the blocks of process 400 may be performed in parallel.

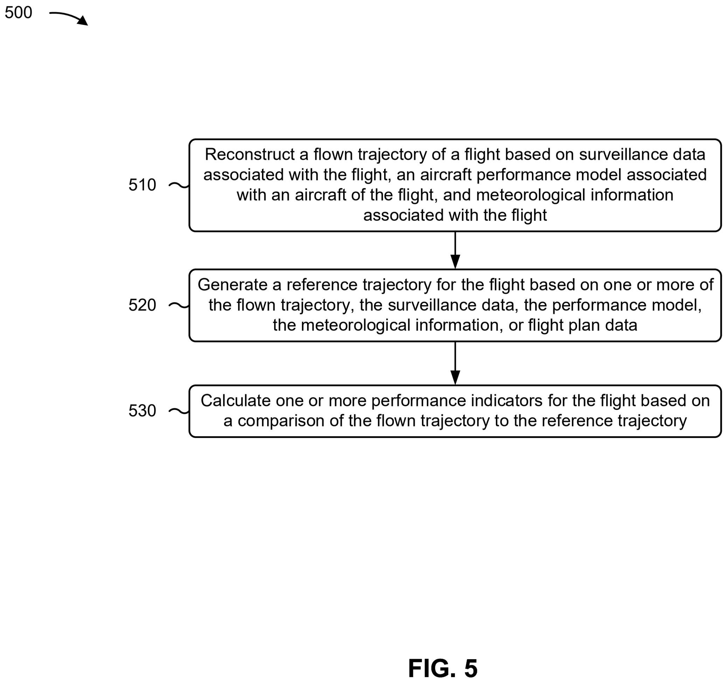

Fig. 5 is a flowchart of an example process 500 associated with a system to assess operational efficiency and environmental impact of flights. One or more process blocks of Fig. 5 are performed by a flight assessment system (e.g., flight assessment system 210) and/or by another device or a group of devices separate from or including the flight assessment system, such as a TCI (e.g., TCI 220), a trajectory assessment module (e.g., trajectory assessment module 230), a communication device (e.g., communication device 240), and/or a data source (e.g., data source 250). Additionally, or alternatively, one or more process blocks of Fig. 5 may be performed by one or more components of device 300, such as processor 320, memory 330, input component 340, output component 350, and/or communication component 360. As shown in Fig. 5, process 500 includes reconstructing a flown trajectory of a flight based on surveillance data associated with the flight, an aircraft performance model associated with an aircraft of the flight, and meteorological information associated with the flight (block 510). For example, the flight assessment system may reconstruct a flown trajectory of a flight based on surveillance data associated with the flight, an aircraft performance model associated with an aircraft of the flight, and meteorological information associated with the flight, as described above.

As further shown in Fig. 5, process 500 includes generating a reference trajectory for the flight based on one or more of the flown trajectory, the surveillance data, the aircraft performance model, the meteorological information, or flight plan data (block 520). For example, the flight assessment system may generate a reference trajectory for the flight based on one or more of the flown trajectory, the surveillance data, the aircraft performance model, the meteorological information, or flight plan data, as described above.

As shown in Fig. 5, process 500 includes calculating one or more performance indicators for the flight based on a comparison of the flown trajectory to the reference trajectory (block 530). For example, the flight assessment system may calculate one or more performance indicators for the flight based on a comparison of the flown trajectory to the reference trajectory, as described above.

Process 500 may include additional aspects, such as any single aspect or any combination of aspects described below and/or in connection with one or more other processes described elsewhere herein.

In a first aspect, process 500 includes extracting aircraft intent information from the surveillance data, reconstructing the flown trajectory based on the aircraft intent information, and generating the reference trajectory based on the aircraft intent information or the flight plan data.

In a second aspect, alone or in combination with the first aspect, reconstructing the flown trajectory includes estimating an initial mass for the aircraft, and the reference trajectory is generated based on the initial mass for the aircraft.

In a third aspect, alone or in combination with one or more of the first and second aspects, the one or more performance indicators include at least one of one more performance indicators associated with operational efficiency, or one or more performance indicators associated with environmental impact.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

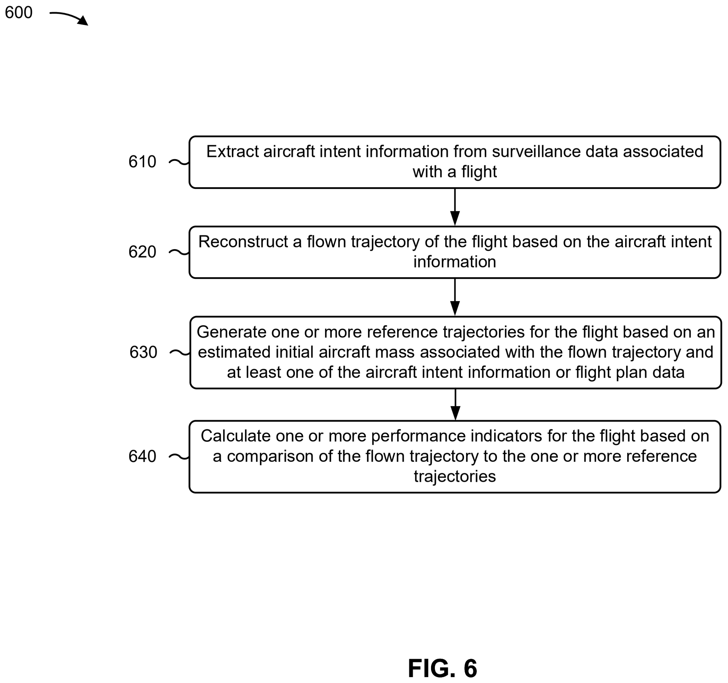

Fig. 6 is a flowchart of an example process 600 associated with a system to assess operational efficiency and environmental impact of flights. One or more process blocks of Fig. 6 are performed by a flight assessment system (e.g., flight assessment system 210) and/or by another device or a group of devices separate from or including the flight assessment system, such as a TCI (e.g., TCI 220), a trajectory assessment module (e.g., trajectory assessment module 230), a communication device (e.g., communication device 240), and/or a data source (e.g., data source 250). Additionally, or alternatively, one or more process blocks of Fig. 6 may be performed by one or more components of device 300, such as processor 320, memory 330, input component 340, output component 350, and/or communication component 360.

As shown in Fig. 6, process 600 includes extracting aircraft intent information from surveillance data associated with a flight (block 610). For example, the flight assessment system may extract aircraft intent information from surveillance data associated with a flight, as described above.

As further shown in Fig. 6, process 600 includes reconstructing a flown trajectory of the flight based on the aircraft intent information (block 620). For example, the flight assessment system may reconstruct a flown trajectory of the flight based on the aircraft intent information, as described above.

As further shown in Fig. 6, process 600 includes generating one or more reference trajectories for the flight based on an estimated initial aircraft mass associated with the flown trajectory and at least one of the aircraft intent information or flight plan data (block 630). For example, the flight assessment system may generate one or more reference trajectories for the flight based on an estimated initial aircraft mass associated with the flown trajectory and at least one of the aircraft intent information or flight plan data, as described above.

As further shown in Fig. 6, process 600 includes calculating one or more performance indicators for the flight based on a comparison of the flown trajectory to the one or more reference trajectories (block 640). For example, the flight assessment system may calculate one or more performance indicators for the flight based on a comparison of the flown trajectory to the one or more reference trajectories, as described above.

Process 600 may include additional aspects, such as any single aspect or any combination of aspects described below and/or in connection with one or more other processes described elsewhere herein.

In a first aspect, the one or more reference trajectories include one or more of a flight plan trajectory for the flight, an optimal distance trajectory for the flight, an optimal cost trajectory for the flight, an optimal fuel consumption trajectory for the flight, an optimal emissions trajectory for the flight, or an optimal noise trajectory for the flight.

In a second aspect, alone or in combination with the first aspect, process 600 includes determining one or more corrective actions for the flight or a subsequent flight based on the one or more performance indicators.

Although Fig. 6 shows example blocks of process 600, in some implementations, process 600 includes additional blocks, fewer blocks, different blocks, or differently arranged blocks than those depicted in Fig. 6. Additionally, or alternatively, two or more of the blocks of process 600 may be performed in parallel.

The foregoing disclosure provides illustration and description, but is not intended to be exhaustive or to limit the implementations described herein to the precise forms that are described. Modifications and variations can be made in light of the above description or may be acquired from practice of the implementations described herein.

As used herein, the term "component" is intended to be broadly construed as hardware, firmware, and/or a combination of hardware and software. It will be apparent that systems and/or methods described herein can be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

Even though particular combinations of features are recited in the claims and/or described in the specification, these combinations are not intended to limit the implementations described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item. When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of").

## Claims

1. A method (400; 500; 600), comprising:
reconstructing a flown trajectory of a flight based on surveillance data associated with the flight (410);
generating one or more reference trajectories for the flight based on the surveillance data or flight plan data (420); and
calculating one or more performance indicators for the flight based on a comparison of the flown trajectory to the one or more reference trajectories (430; 530).

2. The method (400; 500; 600) of claim 1, wherein reconstructing the flown trajectory of the flight (410) comprises:
reconstructing the flown trajectory of the flight based on the surveillance data, an aircraft performance model associated with an aircraft of the flight, and meteorological information associated with the flight (510).

3. The method (400; 500; 600) of claim 2, wherein generating the one or more reference trajectories for the flight (420) comprises:
generating the one or more reference trajectories for the flight based on the meteorological information and at least one of the aircraft performance model associated with the aircraft of the flight or one or more other aircraft performance models (520).

4. The method (400; 500; 600) of claim 1, wherein reconstructing the flown trajectory of the flight (410) comprises:
reconstructing the flown trajectory of the flight based on aircraft intent information (620) extracted from the surveillance data and one or more initial conditions associated with the flight, wherein the one or more initial conditions includes an initial mass of an aircraft of the flight.

5. The method (400; 500; 600) of claim 4, wherein generating the one or more reference trajectories for the flight (420) comprises:
generating the one or more reference trajectories for the flight based on the aircraft intent information and the initial mass.

6. The method (400; 500; 600) of claim 4, wherein reconstructing the flown trajectory of the flight (410) comprises:
estimating the initial mass based on the aircraft intent information, the surveillance data, meteorological information associated with the flight, and a performance model associated with the aircraft of the flight.

7. The method (400; 500; 600) of claim 1, wherein the reconstructing the flown trajectory of the flight (410) results in an aircraft state vector (125) associated with the flown trajectory,
wherein generating the one or more reference trajectories for the flight (420) results in respective reference aircraft state vectors (130) associated with the one or more reference trajectories, and
wherein each performance indicator, of the one or more performance indicators, is based on a comparison of the aircraft state vector (125) associated with the flown trajectory and the respective reference aircraft state vector (130) associated with a reference trajectory of the one or more reference trajectories.

8. The method (400; 500; 600) of claim 7, wherein each aircraft state vector (125), of the aircraft state vector associated with the flown trajectory and the respective reference aircraft state vectors (130) associated with the one or more reference trajectories, includes values for one or more of aircraft mass, fuel consumption, gaseous emissions, cost, or noise.

9. The method (400; 500; 600) of claim 1, wherein the one or more reference trajectories include one or more of a flight plan trajectory for the flight, an optimal distance trajectory for the flight, an optimal cost trajectory for the flight, an optimal fuel consumption trajectory for the flight, an optimal emissions trajectory for the flight, or an optimal noise trajectory for the flight.

10. The method (400; 500; 600) of claim 1, wherein the one or more performance indicators includes at least one of:
one or more distance indicators based on a comparison of a distance associated with the flown trajectory and respective distances associated with the one or more reference trajectories,
one or more flight level indicators based on a comparison of a flight level associated with the flown trajectory and respective flight levels associated with the one or more reference trajectories,
one or more fuel consumption indicators based on a comparison of a fuel consumption associated with the flown trajectory and respective fuel consumptions associated with the one or more reference trajectories,
one or more cost indicators based on a comparison of a cost associated with the flown trajectory and respective costs associated with the one or more reference trajectories,
one or more environmental impact indicators based on a comparison of a carbon dioxide (CO₂) or non-CO₂ environmental effect associated with the flown trajectory and respective CO₂ or non-CO₂ environmental effects associated with the one or more reference trajectories, or
one or more noise indicators based on a comparison of a noise level associated with the flown trajectory and respective noise levels associated with the one or more reference trajectories.

11. The method (400; 500; 600) of claim 1, further comprising:
determining one or more corrective actions for the flight or a subsequent flight based on the one or more performance indicators (145).

12. The method (400; 500; 600) of claim 11, wherein reconstructing the flown trajectory for the flight comprises reconstructing the flown trajectory for the flight during the flight, and further comprising:
controlling an aircraft of the flight, during the flight, in accordance with the one or more corrective actions.

13. A system (100; 210), comprising:
a trajectory computing infrastructure, TCI, (220) configured to:
reconstruct a flown trajectory of a flight based on surveillance data associated with the flight, an aircraft performance model associated with an aircraft of the flight, and meteorological information associated with the flight (115), and
generate a reference trajectory for the flight based on one or more of the flown trajectory, the surveillance data, the aircraft performance model, the meteorological information, or flight plan data (120); and
a trajectory assessment module (230) configured to:
calculate one or more performance indicators for the flight based on a comparison of the flown trajectory to the reference trajectory (135).

14. The system (100; 210) of claim 13, wherein the TCI (220) is further configured to:
extract aircraft intent information from the surveillance data,
reconstruct the flown trajectory based on the aircraft intent information, and
generate the reference trajectory based on the aircraft intent information or the flight plan data, wherein the TCI (220), to reconstruct the flown trajectory, is configured to estimate an initial mass for the aircraft, and wherein the TCI (220) is configured to generate the reference trajectory based on the initial mass for the aircraft.

15. A non-transitory computer-readable medium (330) storing a set of instructions, the set of instructions comprising:
one or more instructions that, when executed by one or more processors (320) of a device (300), cause the device (300) to perform the method (400; 500; 600) according to any one of the claims 1 to 12.
